# EUROPÄISCHE PATENTANMELDUNG

(11) **EP 1 865 188 A1**
(43) Veröffentlichungstag der Anmeldung: **12.12.2007**
(21) Anmeldenummer: 07109619.2
(22) Anmeldetag: 05.06.2007
(51) Int. Cl.: F02M 35/12, G10K 11/16, F16L 55/033

(54) **Schalldämpfer für aufgeladene Motoren**

(30) Priorität: 09.06.2006 FR 0652506
(71) Anmelder: MANN+HUMMEL GmbH, 71638 Ludwigsburg (DE)
(72) Erfinder: Ory, Jean-Philippe, 53000, Laval (FR); Cottereau, Marc, 53000, Laval (FR)

(57) **Zusammenfassung**

Schalldämpfer zum Dämpfen insbesondere des durch einen von einem Turbolader aufgeladenen Motor hervorgerufenen Schalls, hergestellt aus einem synthetischen Material mittels Formguss und dazu bestimmt, im Ansaugluftkreislauf dieses Motors angeschlossen zu werden, bestehend aus zwei röhrenartigen Anschlussstücken (1, 2) in Form von halben Büchsen, sich gegenüberliegend zusammengebaut auf Höhe ihrer jeweiligen Enden, wobei sie eine ringförmige Zwischenwand (3) so einschließen, dass dadurch zwei Dämpfungskammern (7, 8) begrenzt werden, wobei sich jedes dieser ringförmigen Anschlussstücke (1, 2) in ein Rohr (5, 6) verlängert, das dazu bestimmt ist, an eine Leitung des Ansaugluftkreislaufs des Motors angeschlossen zu werden, und zwar jeweils ein Einlassrohr (5) und ein Auslassrohr (6) für die Ansaugluft, dadurch gekennzeichnet, dass auf der ringförmigen Zwischenwand (3) ein röhrenartiges Segment (11) angebracht ist, das die beiden in Reihe montierten Dämpfungskammern (7, 8) begrenzt.

## Beschreibung

Die vorliegende Erfindung hat einen Schalldämpfer zum Gegenstand zum Dämpfen insbesondere des durch einen von einem Turbolader aufgeladenen Motor hervorgerufenen Schalls, um mindestens zwei charakteristische Frequenzen eines Schalls und gewisse, daraus abgeleitete Frequenzen zu dämpfen.

Gemäß der Erfindung wird ein derartiger Schalldämpfer durch Formguss aus synthetischem Material hergestellt und dient dazu, in dem Ansaugluftkreislauf eines Motors angeschlossen zu werden.

Zahlreiche Kraftfahrzeuge mit Benzinmotor oder Dieselmotor sind mit einem aufgeladenen Turbomotor ausgestattet, bestehend aus einer ersten, durch die Auspuffgase des Motors angetriebenen Turbine, die eine zweite Turbine antreibt, die auf der gleichen Welle angebracht ist und die Luft oder die Luft-/Kraftstoffmischung vor dem Einlass in den Motor komprimiert. Solch ein Aggregat hat den Vorteil, die Motorleistung deutlich zu verbessern, ohne das Gewicht des Motors zu sehr zu erhöhen.

Allerdings hat dies den Nachteil, dass dadurch ein relativ hoher Schallpegel erzeugt wird.

Um diesen Nachteil zu beheben, wurde schon vorgeschlagen, Turbomotoren mit Schalldämpfern, insbesondere mit einem so genannten Schalldämpfer "A-tubes" im Ansaugluftkreislauf des Motors einzubauen.

Ein derartiges System ist allerdings ziemlich komplex, wenig effizient und außerdem umfangreich.

Darüber hinaus kann ein derartiger Schalldämpfer nicht leicht an unterschiedliche Frequenzen gemäß den aufgeladenen Motoren, in die er eingebaut werden soll, angepasst werden.

Gegenstand der vorliegenden Erfindung ist es, einen Schalldämpfer vorzuschlagen, der diese Nachteile behebt.

Dieser Schalldämpfer besteht aus zwei röhrenartigen Anschlussstücken in Form von halben Büchsen, die einander gegenüber angeordnet und an ihren jeweiligen Enden zusammengefügt sind, wobei zwischen beiden eine ringförmige Zwischenwand so eingefügt ist, dass dadurch zwei Dämpfungskammern entstehen

Jedes dieser röhrenartigen Anschlussstücke hat in seiner Verlängerung ein Rohr, das für den Anschluss an einen Ansaugluftkreislauf des Motors vorgesehen ist, und zwar jeweils ein Einlassrohr und ein Auslassrohr für die Ansaugluft.

Gemäß der Erfindung ist ein derartiger Schalldämpfer dadurch gekennzeichnet, dass an der ringförmigen Zwischenwand ein röhrenartiges Segment angebracht ist, welches die beiden in Reihe montierten Dämpfungskammern begrenzt.

Die Ausmaße und die Geometrie der beiden Dämpfungskammern sowie der Zwischenwand sind nach der Frequenz der zu dämpfenden Geräusche ausgelegt.

Gemäß der Erfindung haben die Dämpfungskammern im Allgemeinen eine zylindrische Form.

Diese Kammern können auch eine nicht zylindrische Form haben, ohne dass sie deswegen den Rahmen der Erfindung verlassen, allerdings mit geringerer Effizienz.

Der erfindungsgemäße Schalldämpfer hat den Vorteil, dass er an eine Vielzahl von Geräuschen, die durch von einem Kompressor aufgeladene unterschiedliche Motoren erzeugt werden, angepasst werden kann, ohne dass dadurch die Struktur des Schalldämpfers und seine Herstellung von Grund auf geändert werden müssen.

Entsprechend den gedämpften Frequenzen genügt es, die ringförmige Zwischenwand zu modifizieren, insbesondere die Länge ihres röhrenartigen Segmentes, um so eine Anpassung an die Frequenzen zu erreichen.

Im Allgemeinen dringen das Einlassrohr und das Auslassrohr in die jeweilige Dämpfungskammer; ihre Geometrie ist ebenfalls nach der Frequenz der zu dämpfenden Geräusche ausgelegt.

Die vorgelagerte und mit dem Einlassrohr verbundene Dämpfungskammer kann einen größeren oder kleineren Durchmesser als die nachgelagerte und mit dem Auslassrohr verbundene Dämpfungskammer haben; die Wahl richtet sich nach den räumlichen Verhältnissen und der akustischen Effizienz.

Gemäß eines weiteren Merkmals der Erfindung ist jedes röhrenartige Anschlussstück an seinem freien Ende mit einem Umfangsflansch versehen.

Die Umfangsflansche der beiden röhrenartigen Anschlussstücke liegen sich gegenüber und sind mit Falzen versehen, welche Verschlussorgane definieren, die geeignet sind, zusammenzuwirken, um die ringförmige Zwischenwand auf Höhe ihres Außenumfangs einzuschließen, um so mit der Form dieser Elemente vor ihrem Zusammenschweißen eine Verbindung zu schaffen.

Gemäß eines bevorzugten Merkmals der Erfindung ist das röhrenartige Segment der ringförmigen Zwischenwand mit einem kreisförmigen radialen Flügel oder einem vorgelagerten Flügel ausgestattet, dessen Außenumfang mit einer axialen Umfangsschelle ausgestattet ist, mittels derer sie zwischen den beiden röhrenartigen Anschlussstücken eingeschlossen wird.

Beinhalten kann das röhrenartige Segment vorzugsweise einen radialen ringförmigen Hilfsflügel oder einen nachgelagerten Flügel, der dem radialen ringförmigen Hauptflügel oder vorgelagerten Flügel in Umlaufrichtung der Ansaugluft nachgelagert ist, wobei sein Umfang gegen den Innenumfang der nachgelagerten Kammer angebracht wird.

Das Vorhandensein dieses nachgelagerten Flügels hat den Vorteil, dass die beiden Dämpfungskammern besser getrennt werden können, was eine effizientere Dämpfung der durch den Turbolader hervorgerufenen Geräusche zur Folge hat.

Es wird darauf hingewiesen, dass in Übereinstimmung mit der Erfindung die beiden röhrenartigen Anschlussstücke zusammengeschweißt werden können (Rotationsschweißen, Vibrationsschweißen oder Spiegelschweißen) oder ggf. durch Verschrauben miteinander, wobei eine Dichtung dazwischen angebracht wird.

Der Schalldämpfer, der Gegenstand der Erfindung ist, hat im Allgemeinen einen Durchmesser zwischen 50 und 150 mm für eine Länge der Dämpfungsvolumen zwischen 50 und 150 mm und ein Frequenzverhalten von 1000 bis 5000 Hz.

Die Merkmale des Schalldämpfers, der Gegenstand der Erfindung ist, werden detaillierter beschrieben unter Bezugnahme auf die nicht einschränkenden, beigefügten Zeichnungen, in denen:
- die Figuren 1a und 1b perspektivische Explosionszeichnungen eines Schalldämpfers gemäß einer ersten Variante der Erfindung sind,
- die Figur 2 eine perspektivische teilweise Schnittansicht dieses Schalldämpfers ist,
- die Figur 3 eine halbe Schnittansicht dieses Schalldämpfers ist,
- die Figur 4 eine perspektivische Explosionszeichnung eines Schalldämpfers gemäß einer zweiten Variante der Erfindung ist.

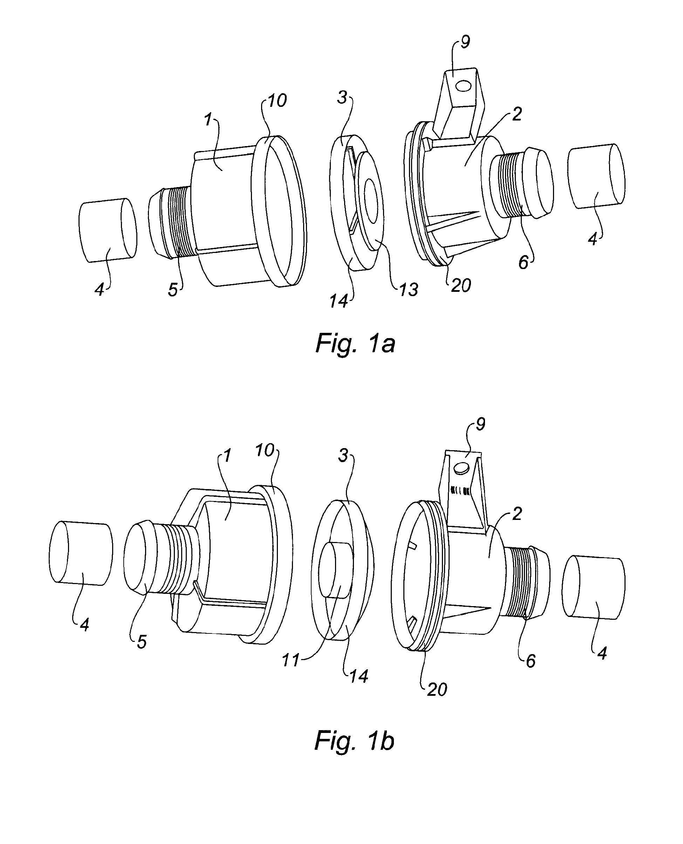

Gemäß den Figuren 1a und 1b besteht der Schalldämpfer einerseits aus zwei röhrenartigen Anschlussstücken in Form von halben, im Wesentlichen zylindrischen Büchsen 1, 2 jeweils gelagert in der Verlängerung eines Einlassrohres 5 für die Ansaugluft und eines Auslassrohres 6 für diese Luft, und andererseits aus einer ringförmigen Zwischenwand 3, die zwischen den röhrenartigen Anschlussstücken 1 und 2 eingeschlossen ist.

Die Elemente 4 entsprechen Metalleinsätzen zur Versteifung, die in den Rohren 5 und 6 eingebaut sind.

Eine am Außenumfang des röhrenartigen Anschlussstückes 2 angebrachte Lasche 9 ermöglicht die Befestigung des Schalldämpfers an einem ortsfesten Teil des Motors.

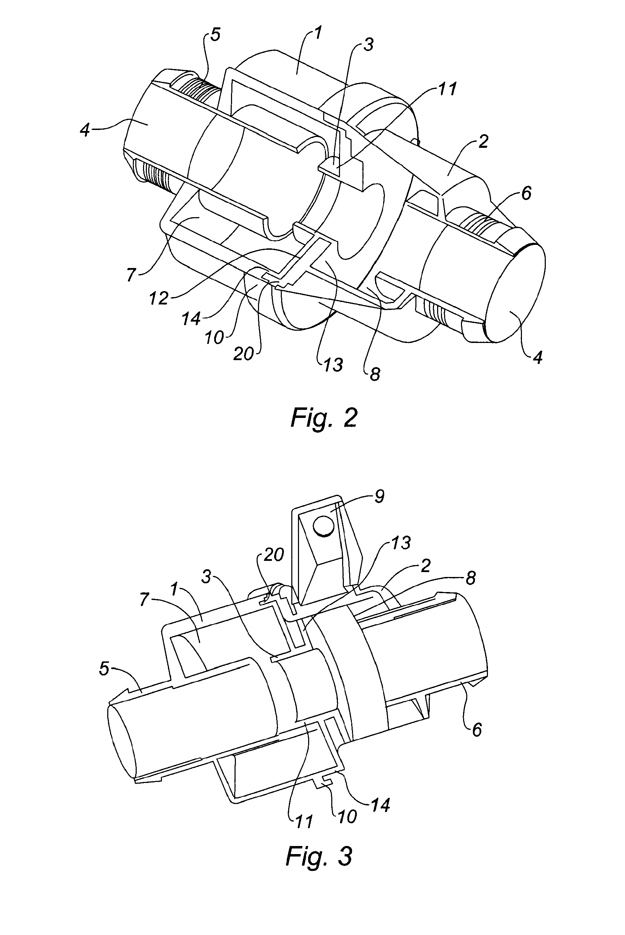

Gemäß den Figuren 2 und 3 ist jedes der röhrenartigen Anschlussstücke 1, 2 an seinem freien Ende mit einem Umfangsflansch 10, 20 ausgestattet.

Die beiden Umfangsflansche 10, 20 liegen sich gegenüber und sind mit Falzen versehen, welche Verschlussorgane definieren, die sowohl untereinander als auch mit dem Außenumfang der ringförmigen Zwischenwand 3 zusammenwirken, um so mit der Form der röhrenartigen Anschlussstücke 1,2 und der ringförmigen Zwischenwand 3 eine Verbindung zu schaffen.

Diese Elemente 1, 2, 3 werden dann mittels einer umlaufenden Schweißnaht fest verbunden, und zwar durch ein beliebiges Schweißverfahren (Rotationsschweißen, Vibrationsschweißen...), um so eine Funktionseinheit zu erhalten.

Gemäß den Figuren 1 bis 3 besteht die ringförmige Zwischenwand 3 aus einem röhrenartigen Segment 11 mit zwei kreisförmigen radialen Flügeln, d.h. einem vorgelagerten Flügel 12 oder Hauptflügel und einem nachgelagerten Flügel 13 oder Hilfsflügel, der geringere Ausmaße hat als der vorgelagerte Flügel 12.

Der Durchmesser und die Länge des röhrenartigen Segmentes 11 werden entsprechend der Frequenz der zu dämpfenden Geräusche gewählt.

Der vorgelagerte Flügel 12 umschließt das röhrenartige Segment 11 auf Höhe seines Mittelbereiches und erstreckt sich in den vorgelagerten Bereich an seinem Außenumfang durch eine axiale Umfangsschelle 14, die mit den Verschlussorganen ineinandergreift, mit denen die Umfangsflansche 10, 20 der beiden röhrenartigen Anschlussstücke 1, 2 ausgestattet sind, um so die Verbindung mit der Form der drei Elemente 1, 2, 3 vor dem Zusammenschweißen zu ermöglichen.

Der nachgelagerte Flügel 13 umschließt seinerseits das röhrenartige Segment 11 auf Höhe seines nachgelagerten Endes.

Die Anschlussstücke 1, 2 und die ringförmige Zwischenwand 3 begrenzen somit zwei in Reihe montierte Schalldämpfungskammern 7, 8, und zwar eine vorgelagerte Dämpfungskammer 7 und eine nachgelagerte Dämpfungskammer 8, die wirksam voneinander getrennt sind und deshalb eine optimale Dämpfung von mindestens zwei durch einen Turbolader erzeugte Schallfrequenzen erreichen.

Eine Modifizierung der Länge des röhrenartigen Segmentes 11 der ringförmigen Zwischenwand 3 ermöglicht eine Regulierung der Frequenzen der so gedämpften Geräusche.

Gemäß den Figuren 2 und 3 ist der Durchmesser der vorgelagerten Dämpfungskammer 7 größer als der Durchmesser der nachgelagerten Dämpfungskammer 8.

Das Einlassrohr 5 für die Ansaugluft und das Auslassrohr 6 für diese Luft erstrecken sich jeweils bis zum Innenbereich des jeweiligen röhrenartigen Anschlussstücks 1, 2 und dringen folglich bis in den Innenbereich der vorgelagerten Dämpfungskammer 7 oder der nachgelagerten Dämpfungskammer 8.

Der Durchmesser der Rohre 5, 6 und ihre Länge im Innenbereich der Dämpfungskammern 7, 8 werden ebenfalls entsprechend der Frequenz der zu dämpfenden Geräusche gewählt.

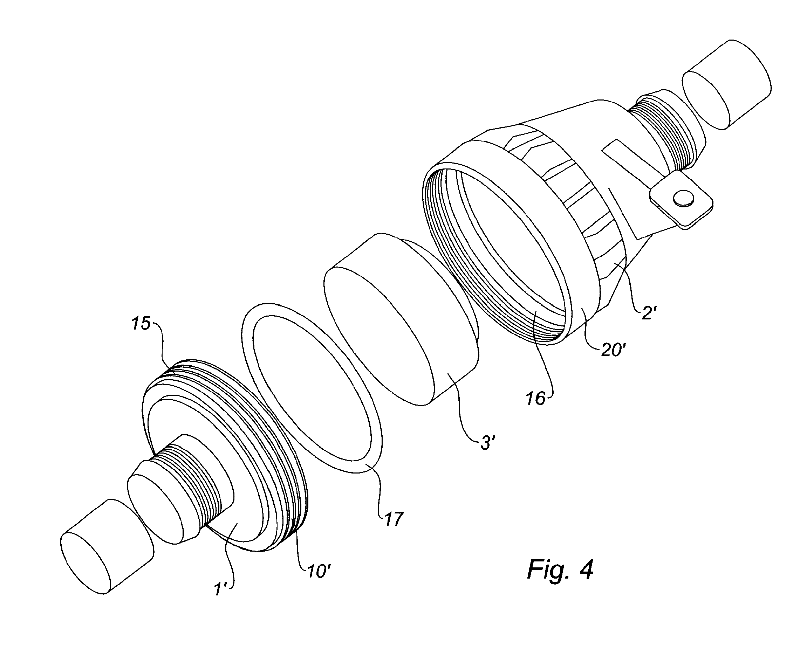

Gemäß Figur 4 ist der Schalldämpfer grundsätzlich gleichartig mit dem in den Figuren 1 bis 3 gezeigten, doch werden die beiden röhrenartigen Anschlussstücke 1', 2' nicht mittels einer umlaufenden Schweißnaht fest verbunden, sondern sind jeweils an ihren jeweiligen Umfangsflanschen 10', 20' mit einem entsprechenden Außengewinde 15 und einem Innengewinde 16 ausgestattet, um so die Verbindung durch Verschraubung dieser beiden Elemente 1', 2' unter Einschluss der ringförmigen Zwischenwand 3' zu ermöglichen. Eine ringförmige Dichtung 17 garantiert die Dichtigkeit des so zusammengebauten Aggregats.

## Patentansprüche

1. Schalldämpfer, insbesondere zum Dämpfen von Schall hervorgerufen durch einen von einem Turbolader aufgeladenen Motor, hergestellt aus synthetischem Material im Formguss und dazu bestimmt, im Ansaugluftkreislauf dieses Motors angeschlossen zu werden, bestehend aus zwei röhrenartigen Anschlussstücken (1,2) in Form von halben Büchsen, gegenüberliegend auf Höhe ihrer jeweiligen Enden zusammengebaut, wobei sie eine ringförmige Zwischenwand (3) so einschließen, dass **dadurch** zwei Dämpfungskammern (7, 8) begrenzt werden, wobei sich jedes dieser röhrenartigen Anschlussstücke (1, 2) in ein Rohr (5, 6) verlängert, dass dazu bestimmt ist, an eine Leitung des Ansaugluftkreislaufes des Motors angeschlossen zu werden, und zwar jeweils ein Einlassrohr (5) und ein Auslassrohr (6) für die Ansaugluft, **dadurch gekennzeichnet, dass** auf der ringförmigen Zwischenwand (3) ein röhrenartiges Segment (11) angebracht ist, das zwei in Reihe montierte Dämpfungskammern (7, 8) begrenzt.

2. Schalldämpfer nach Anspruch 1, **dadurch gekennzeichnet, dass** das Einlassrohr (5) und das Auslassrohr (6) in die jeweilige Dämpfungskammer (7, 8) eindringen.

3. Schalldämpfer nach einem der Ansprüche 1 und 2, **dadurch gekennzeichnet, dass** die Dämpfungskammern (7, 8) eine im Wesentlichen zylindrische Form haben, wobei die vorgelagerte Dämpfungskammer (7), die dem Einlassrohr (5) zugeordnet ist, einen größeren Durchmesser als die nachgelagerte Dämpfungskammer (8) hat, die dem Auslassrohr (6) zugeordnet ist.

4. Schalldämpfer nach einem der Ansprüche 1 bis 3, **dadurch gekennzeichnet, dass** jedes der röhrenartigen Anschlussstücke (1, 2) an seinem freien Ende mit einem Umfangsflansch (10, 20) ausgestattet ist, wobei sich die Umfangsflansche (10, 20) der beiden röhrenartigen Anschlussstücke (1, 2) gegenüberliegen und mit Falzen ausgestattet sind, die Verschlussorgane definieren, die geeignet sind zusammenzuwirken, indem sie die ringförmige Zwischenwand (3) auf Höhe ihres Außenumfangs einschließen, um so eine Verbindung mit der Form dieser Elemente (1, 2, 3) vor ihren Verschweißen zu ermöglichen.

5. Schalldämpfer nach Anspruch 4, **dadurch gekennzeichnet, dass** die ringförmige Zwischenwand (3) aus dem röhrenartigen Segment (11) besteht, das mit einem radialen kreisförmigen Flügel (12) ausgestattet ist, dessen Außenumfang mit einer axialen Umfangsschelle (14) ausgestattet ist, mittels derer sie zwischen den beiden röhrenartigen Anschlussstücken (1, 2) eingeschlossen wird.

6. Schalldämpfer nach Anspruch 6, **dadurch gekennzeichnet, dass** das röhrenartige Segment (11) einen radialen kreisförmigen Hilfsflügel (13) beinhaltet, welcher dem radialen kreisförmigen Hauptflügel (12) in Umlaufrichtung der Ansaugluft nachgelagert ist, wobei sein Umfang gegen den Innenumfang der nachgelagerten Kammer (8) angebracht wird.

7. Schalldämpfer nach Anspruch 1, **dadurch gekennzeichnet, dass** die beiden röhrenartigen Anschlussstücke (1, 2) miteinander verschweißt sind.

8. Schalldämpfer nach Anspruch 1, **dadurch gekennzeichnet, dass** die beiden röhrenartigen Anschlussstücke (1', 2') mittels Verschraubung mit einer dazwischen eingefügten Dichtung miteinander verbunden sind.
